**Europäisches Patentamt**

(19) **European Patent Office**

**Office européen des brevets**

(11) Veröffentlichungsnummer: **0 032 965**
**B1**

(12) **EUROPÄISCHE PATENTSCHRIFT**

(45) Veröffentlichungstag der Patentschrift:
**09.11.83**

(51) Int. Cl.³: **B 21 D 53/08,** B 23 P 15/26,
F 24 J 3/02

(21) Anmeldenummer: **80100450.8**

(22) Anmeldetag: **29.01.80**

(54) Verfahren zur Herstellung von Wärmeaustauschelementen und Vorrichtung zur Durchführung des Verfahrens.

(43) Veröffentlichungstag der Anmeldung:
**05.08.81 Patentblatt 81/31**

(45) Bekanntmachung des Hinweises auf die Patenterteilung:
**09.11.83 Patentblatt 83/45**

(84) Benannte Vertragsstaaten:
**AT BE CH DE FR GB IT LU NL SE**

(56) Entgegenhaltungen:
**CH - A - 595 603**
**DE - A - 2 615 280**
**DE - A - 2 737 643**
**DE - A - 2 808 724**
**DE - A - 2 829 173**
**DE - B - 2 406 226**
**FR - A - 2 416 748**
**FR - A - 2 426 872**
**US - A - 4 120 284**
**US - A - 4 158 908**
**US - A - 4 160 476**

(73) Patentinhaber: **Litessa-Anstalt, Aeulerstrasse 38,
FL-9490 Vaduz (LI)**

(72) Erfinder: **Der Erfinder hat auf seine Nennung verzichtet**

(74) Vertreter: **Lorenz, Wilhelm, Hubertusstrasse 83 1/2,
D-8035 Gauting (DE)**

Verfahren zur Herstellung von Wärmeaustauschelementen und Vorrichtung
zur Durchführung des Verfahrens

Die Erfindung betrifft ein Verfahren zur Herstellung von Wärmeaustauschelementen, insbesondere für Solaranlagen oder elektrische Heizeinrichtungen, bei dem Rohre in halbrundförmige Nuten von Blechbahnen eingebracht werden und bei dem nach Einbringen des Rohres in seine zugeordnete Nut die Randbereiche der Nut durch Preßwerkzeuge gegeneinander gedrückt werden, um den Nutspalt zu verkleinern und die Innenwand der Nut an die Mantelfläche des Rohres anzupressen, wobei dieser Zustand mechanisch fixiert wird.

Aus der DE-B2-2 406 226 ist ein Verfahren und eine Maschine zum Biegen von Metallblech um Rohrabschnitte mit den angeführten Merkmalen bekanntgeworden. Bei diesem Verfahren werden also Rohrabschnitte in tiefgezogene Nuten des Bleches eingelegt. Da die Tiefe der Nut wesentlich größer ist als der Durchmesser des Rohres, können die Nutwände oberhalb des Rohres aufeinander zu bewegt und durch Punktschweißung miteinander verbunden werden. Nachteilig sind die erforderlichen Schweißarbeiten, da wegen der unterschiedlichen elektrischen Potentiale bei verschiedenen Anwendungsgebieten, z. B. bei Dächern für Solaranlagen, Korrosionsprobleme auftreten.

Es sind weiterhin aus der US-A-4 158 908 Solarkollektorsysteme bekanntgeworden, bei denen Rohre in halbkreisförmige Nuten eines Bleches eingelegt werden. Die Halterung der Rohre erfolgt durch streifenförmige Verbindungselemente, die ebenfalls eine Halbkreisnut besitzen und die mit dem Tragblech verschweißt werden.

Weiterhin ist es aus der US-A-4 120 284 bekanntgeworden, bei Solardächern Rohre in omegaförmige Nuten einer Blechbahn einzulegen. Zur Halterung und Verbesserung des Wärmekontaktes dienen C-förmige Clips aus Federmaterial, die in die dem Rohr abgewendete Außenwand der Nut, insbesondere in die Randbereiche derselben, eingreifen. Die Clips können dabei relativ schmal sein und nur in Abständen aufgebracht werden. Hierdurch ergibt sich der Nachteil, daß die Nut nur an diesen Stellen an die Rohraußenwand angepreßt wird und dementsprechend der Wärmeübergang an den Zwischenstellen nicht verbessert wird. Der Clip kann jedoch auch länger ausgebildet werden. Dann entstehen jedoch unverhältnismäßig große Kosten, da ja der Clip eine erhebliche Federkraft zur Sicherung des erforderlichen Anpreßdruckes aufbringen muß, d. h. seine Materialstärke muß größer als die Wandstärke des das Medium führenden Rohres sein. Allen bekannten Omeganutlösungen zur Verbindung von Rohren mit Blechen ist gemeinsam, daß meistens nur eine punktförmige oder linienförmige Anlage der Nutinnenwand an das Rohr erzielt wird. Bereits geringfügige Abweichungen im 1/10-mm-Bereich hinsichtlich des Verlaufes der Nutlängsachse und der Rohrlängsachse und ebenso geringfügige Abweichungen im Durchmesser der Rohre bzw. in der Breite der Omeganut bewirken diesen Effekt. Wenn nun, wie z. B. beim Wärmepumpenbetrieb, große Wärmemengen der Blechbahn entzogen werden müssen, dann ist jedoch eine großflächige Anlage der Nutinnenwand an der Rohraußenwand unbedingte Voraussetzung. Die Nut muß also mit entsprechendem Kraftaufwand um die Rohraußenwand herumgezogen werden, wozu jedoch die Federkraft von Clips nicht ausreicht. Die starke elastische Anpressung muß dann entsprechend gesichert werden. In vielen Fällen dienen die Rohre auch als tragende Elemente. Die Blechbahn bildet oftmals die Dachaußenhaut, welche auch betreten wird. Die Rohre müssen dementsprechend in den Nuten so befestigt sein, daß sich die Blechbahnen, z. B. bei Betreten und bei starken Windkräften, nicht lösen können. Dies ist jedoch bei der Verwendung von elastischen Clips nicht gewährleistet. Dabei sollen jedoch andererseits Schweiß- oder Lötarbeiten vermieden werden, da sich sonst entsprechende Korrosionsprobleme ergeben, worauf auch in der bereits genannten US-A-4 120 284 hingewiesen sind.

Bei elektrischen Heizeinrichtungen, z. B. bei Paneelheizkörpern für die Raumheizung, wird ebenfalls ein sehr guter Wärmefluß von einem elektrischen Heizstabelement auf die die Wärme abgebende Blechbahn angestrebt, damit Überhitzungen des Heizelementes vermieden werden. Bei einer vorgegebenen Heizleistung und vorgegebener Maximaltemperatur des Heizelementes kommt man mit kürzeren Heizelementen aus, wenn der Wärmeübergang auf die Blechbahn sehr gut ist, woraus sich erhebliche Einsparungen ergeben. Die vom Heizelement nach »hinten«, d. h. in der von der Blechbahn abgewendeten Richtung abgestrahlte Wärme kann zu Überhitzungen, z. B. eines Kunststoffgehäuses, führen, so daß entsprechende Abschirmungen erforderlich werden.

Der Erfindung liegt nun die Aufgabe zugrunde, ein Verfahren zur Herstellung von Wärmeaustauschelementen, insbesondere für Solaranlagen oder elektrische Heizeinrichtungen, vorzuschlagen, bei dem einerseits ein wesentlich besserer Wärmeübergang durch großflächige Anlage der Innenwand der Nut an dem Außenmantel des Rohres und andererseits eine entsprechend haltbare Verbindung der Rohre mit den Blechbahnen erzielt werden, ohne daß Beschädigungen oder Korrosionsangriffe auf die Blechbahn oder auf das Rohr zu befürchten sind.

Die Lösung der gestellten Aufgabe ergibt sich aus den Merkmalen des Anspruchs 1. Die Unteransprüche 2 bis 7 beschreiben bevorzugte Ausführungsformen des Verfahrens. Die Ansprüche 8 bis 11 beziehen sich auf Vorrichtungen zur Durchführung des Verfahrens.

Ein besonderer Vorteil des Verfahrens gemäß der Erfindung liegt darin, daß auf die elastische Rückfederungskraft der Blechbahnen keine Rücksicht genommen werden muß. Es können also beliebige Materialien, z. B. Kupfer oder Aluminium und entsprechende Legierungen verwendet werden. Die Stärke der Blechbahn wird ausschließlich auf die gestellten Anforderungen abgestimmt. Da bei der bevorzugten Ausführungsform die Außenhaut der Blechbahnen das Solardach selbst bildet, erfolgt die Abstimmung entsprechend den an ein Solardach zu stellenden technischen und architektonischen Anforderungen. Die Innenwand der Nut wird mit einem Preßdruck um den Außenmantel der Rohre herumgezogen, der beliebig hoch sein kann, d. h. bis zu dem Wert gesteigert werden kann, bei dem die abgeknickten Ränder der Nut gerade noch nicht einreißen. Dieser hohe Anlagedruck bleibt entsprechend fixiert und erhalten, so daß ständig gewährleistet ist, daß die Innenwand der Nut satt an dem Rohraußenmantel anliegt. Der Wärmefluß erfolgt also großflächig durch direkte Berührung. Es lassen sich praktisch keine Temperaturunterschiede mehr zwischen dem Rohrmantel und der Blechbahn im Bereich der Nutränder feststellen.

Die nachfolgende Beschreibung dient in Verbindung mit den Zeichnungen der weiteren Erläuterung der Erfindung.

Auf den Zeichnungen zeigt

Fig. 1 schaubildlich eine Blechbahn mit einer eingeformten Halbrundnut vor dem Einlegen des Rohres,

Fig. 2 die Blechbahn gemäß Fig. 1 nach dem Einlegen des zugeordneten Rohres,

Fig. 3 die Anordnung gemäß Fig. 2 mit aufgelegten Verbindungselementen,

Fig. 4 die Verformung der halbrundförmigen Nut zu einer Ω-Nut bei gleichzeitigem Einpressen der Verbindungselemente,

Fig. 5 schaubildlich das fertiggestellte Wärmeaustauschelement,

Fig. 6 in vergrößertem Maßstab einen Teilschnitt längs der Linie VI-VI in Fig. 5,

Fig. 7 schaubildlich eine Vorrichtung zur Durchführung eines abgewandelten Verfahrens,

Fig. 8 ähnlich wie Fig. 5 eine schaubildliche Ansicht eines abgewandelten, mit der Vorrichtung gemäß Fig. 7 hergestellten Wärmeaustauschelementes,

Fig. 9 in vergrößertem Maßstab das bei der Ausführungsform gemäß den Fig. 7 und 8 verwendete Verbindungselement,

Fig. 10 in weiterhin vergrößertem Maßstab einen Schnitt längs der Linie X-X in Fig. 8,

Fig. 11 schaubildlich eine weitere Ausführungsform einer Vorrichtung zur Durchführung des Verfahrens,

Fig. 12 einen Schnitt längs der Linie XII-XII in Fig. 11,

Fig. 13 schaubildlich einen Ausschnitt eines Solardaches.

Zur Verbindung von Blechbahnen 1 mit Rohren 2 wird in die Blechbahn 1 mindestens eine im Querschnitt U-förmige Nut 3 eingeformt. Unter »U-förmig« ist dabei zu verstehen, daß die Nut 3 einen im Querschnitt halbkreisförmigen Boden besitzt, dessen Innendurchmesser dem Außendurchmesser des Rohres 2 etwa entspricht und daß sich an den Boden im wesentlichen gerade Stege anschließen. Von diesen Stegen sind die Nutrandbereiche 4 rechtwinklig abgebogen. In der Praxis werden im allgemeinen mehrere, d. h. mindestens zwei im Abstand voneinander parallel verlaufende Nuten 3 in eine Blechbahn 1 eingeformt.

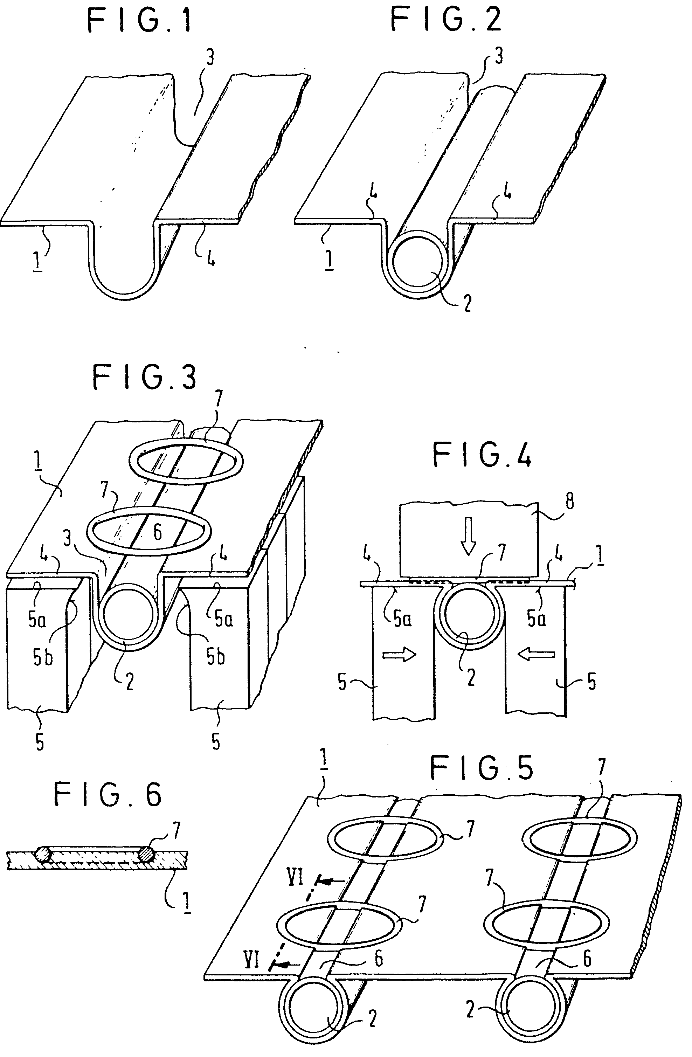

Wie aus Fig. 3 ersichtlich, sind zwei Preßwerkzeuge 5 vorgesehen, welche aufeinander zu bewegt werden können, die sich also zangenartig schließen können. Die Preßwerkzeuge 5 besitzen eine im wesentlichen ebene Auflagefläche 5a, auf welche die Blechbahn 1 mit ihren Nutrandbereichen 4 aufgelegt werden kann. Die Nut 3 mit dem eingelegten Rohr 2 kommt dabei zwischen den Preßwerkzeugen 5 zu liegen. Die Preßwerkzeuge 5 sind im Querschnitt hakenförmig ausgebildet, d. h. sie sind von der ebenen Auflagefläche 5a ausgehend an den einander zugewendeten Flächen bei 5b halbkreisförmig ausgespart. Beim Schließen der Preßwerkzeuge 5 im Sinne der in der Fig. 4 angedeuteten Pfeile werden die Nutrandbereiche 4 um das eingelegte Rohr 2 herumgezogen, wodurch die Nut 3 eine Ω-förmige Gestalt annimmt.

Die Innenwand der Nut 3 wird unter einem starken Anpreßdruck an den Außenmantel des Rohres 2 angepreßt, wobei die Breite des offenen Nutspaltes 6 erheblich vermindert wird.

Es sind weiterhin kreisringförmige Verbindungselemente 7 vorgesehen, welche aus einem im Vergleich zu dem Material der Blechbahn 1 härteren Material bestehen. Die Verbindungselemente 7 werden so auf die Blechbahn 1 aufgelegt, daß sie auf den Nutrandbereichen 4 aufliegen und den Nutspalt 6 überbrücken. Nach Schließen der Preßwerkzeuge 5 werden nun mittels eines weiteren Preßstempels 8 die Verbindungselemente 7 in die Nutrandbereiche 4 eingepreßt. Bei diesem Preßvorgang bilden die ebenen Auflageflächen 5a der Preßwerkzeuge 5 das entsprechende Widerlager.

Die kreisringförmigen Verbindungselemente 7 können Stanzteile oder auch einfach gebogener Draht sein. Ihr Querschnitt kann beliebig, z. B. auch quadratisch sein. Obwohl auch ovale oder anders geformte Teile als Verbindungselemente brauchbar sind, hat die Kreisform den Vorteil, daß die den Nutspalt 6 überbrückenden Bögen sich elastisch oder unelastisch bis zur Geraden verformen können, wobei unterschiedliche Spannungen im Längsverlauf des Nutspaltes 6 sich ausgleichen bzw. zusätzliche Wärmespannungen aufgenommen werden, so daß diese keine Größe erreichen können, bei der die Verankerung der Verbindungselemente 7 in der Blechbahn 1 gefährdet würde.

Wenn das Verbindungselement einen kreisförmigen Querschnitt hat und dieser entsprechend groß gewählt wird, dann wird erreicht, daß bei dem Preßvorgang das ausweichende Material den Umfang entsprechend umfließt, wie dies in Fig. 6 dargestellt ist, d. h. die Verbindungselemente 7 sind in dem Material der Nutrandbereiche 4 entsprechend verankert, und zwar in dem Sinne, daß sie sich nicht von selbst von der Blechbahn lösen können und daß die Verankerung die auf sie wirkende Spannung quer zur Rohrachse und parallel zur Oberfläche der Blechbahn 1 auch unter Berücksichtigung der bei dem Betrieb zusätzlich auftretenden Wärmespannungen mit Sicherheit aufnehmen kann.

Die eingepreßten Verbindungselemente 7 bewirken nun, daß die Nut 3 entsprechend »verschlossen« wird, wobei der Anpreßdruck auf das Rohr 2 erhalten bleibt. Es ist damit gewährleistet, daß die Innenwände der Nut 3 satt und ohne Zwischenräume an dem Außenmantel des Rohres 2 anliegen.

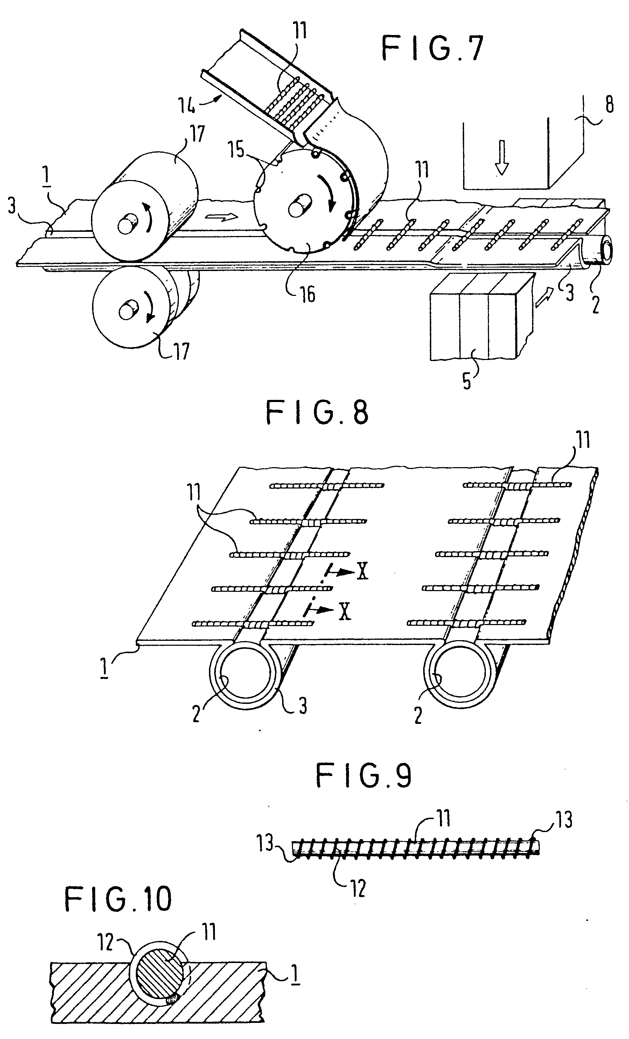

Die Fig. 7 bis 10 erläutern eine Ausführungsform, bei der als Verbindungselemente Drahtstücke 11 verwendet werden, die eine unter Vorspannung aufgewickelte Drahtwendel 12 tragen. Die Drahtwendel 12 ist an den Enden des Drahtstückes 11 bis 13 mit demselben verschweißt oder verlötet, wie dies in Fig. 9 dargestellt ist. Derartige Verbindungselemente können in großer Schnelligkeit preiswert hergestellt werden. Hierzu wird auf einen fortlaufenden Draht eine Drahtwendel aufgewickelt. Durch eine diskontinuierlich arbeitende Schweißeinrichtung werden jeweils zwei bis drei Wicklungen der Wendel 12 mit dem Draht 11 verschweißt, anschließend wird durch eine Trenneinrichtung ein Drahtstück in der Mitte der Schweißstelle abgetrennt. Die so hergestellten Drahtstücke werden in ein Vorratsmagazin 14 eingefüllt. Sie rutschen in Einkerbungen 15 an der Mantelfläche einer umlaufenden Walze 16 und fallen aus den Einkerbungen 15 auf die von Walzen 17 diskontinuierlich geförderte Blechbahn 1. Die Rotationsbewegung der Walze 16 ist mit derjenigen der Walze 17 synchronisiert, so daß dementsprechend die Verbindungselemente in gleichmäßigen Abständen auf die Blechbahn 1 aufgelegt werden.

Das Zusammenpressen der Nut 3 mittels Preßwerkzeugen 5 und das Einpressen der Verbindungselemente in die Randbereiche 4 mittels eines Preßwerkzeuges 8 erfolgt in der gleichen Weise, wie im Zusammenhang mit den Fig. 1 bis 6 beschrieben.

Die aufgewickelte Drahtwendel 12 hat nun wesentliche Bedeutung für die angestrebte Verbindung. Bei Wärmeausdehnungen oder -kontraktionen der Blechbahn 1 folgt die Drahtwendel den entsprechenden Materialbewegungen, ohne daß die Verankerung beansprucht wird, und zwar deshalb, weil sich die Drahtwendel auf dem Drahtstück 11 um geringe Beträge verschieben kann. Durch die besondere Art der Verbindung werden auch unterschiedliche Spannungen, wie sie durch die Arbeit der Preßwerkzeuge 5 in den einzelnen Verbindungselementen erzeugt werden können, etwas ausgeglichen, so daß der angestrebte Erfolg verbessert wird, nämlich daß die Innenwand der Nut 3 mit einem gleichmäßigen Anlagedruck an der Mantelfläche des Rohres 2 anliegt.

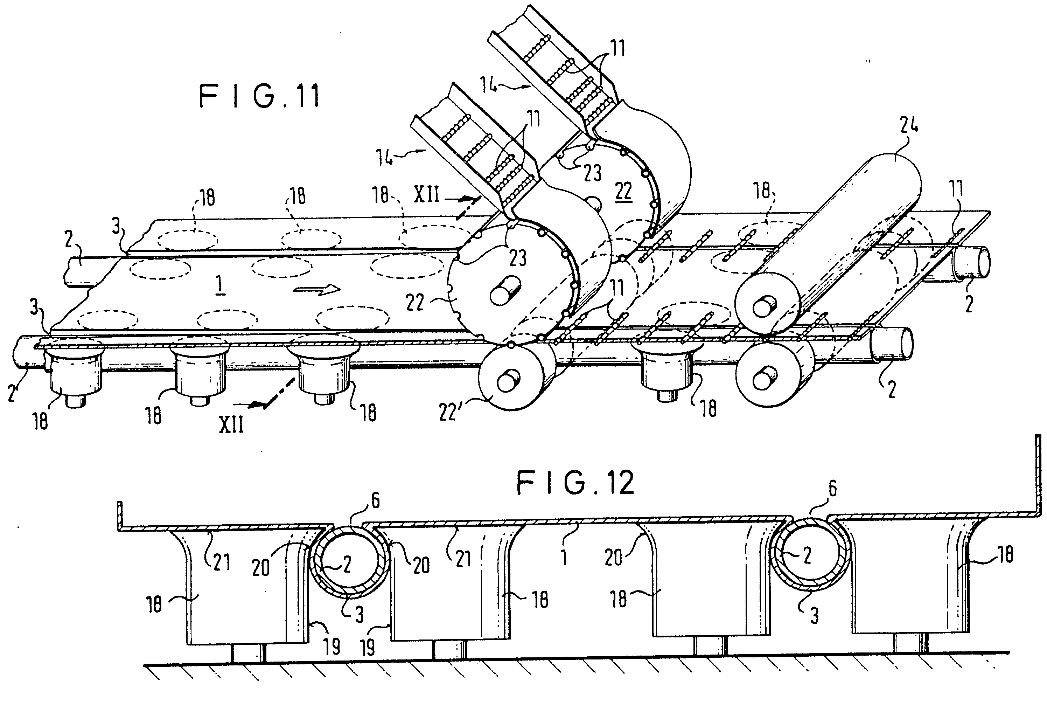

Die Fig. 11 und 12 zeigen eine Vorrichtung, mittels der die Nut 3 im kontinuierlichen Durchlauf der Blechbahn 1 in ihre Ω-Form gebracht und verschlossen wird. Es sind Rollen oder Walzen 18 vorgesehen, die paarweise im Abstand voneinander angeordnet sind. Wenn eine Blechbahn 1 mehrere Nuten 3 besitzt, dann kann eine Walzenstrecke mit einer entsprechenden Anzahl von Walzenpaaren vorgesehen sein. Die Drehachsen der Walzen verlaufen parallel zueinander senkrecht zu der Ebene der Blechbahn. Die Mantelflächen 19 der Walzen 18 sind bei 20 konkav geformt, wobei der Abstand der Stirnränder der Mantelfächen 21 der Walzen 18 der gewünschten Breite des verengten Nutspaltes 6 entspricht. Etwas unterhalb des Randes der Stirnfläche ist der Abstand der Mantelflächen 19 voneinander etwas größer als der Durchmesser des Rohres 2 zusätzlich der doppelten Materialstärke der Blechbahn, so daß also die Nuten 3 mit den eingelegten Rohren 2 zwischen den Mantelflächen 19 durchlaufen.

Damit die Verformung der Nut 3 in die Ω-Form stufenweise verläuft und dementsprechend zu starke Materialbeanspruchungen vermieden werden, ist es zweckmäßig, wenn eine oder mehrere Walzenstrecken vorgeschaltet werden, bei denen der Abstand der Ränder der Mantelflächen 21 der Walzen 18 voneinander größer ist als die Breite des Nutspaltes 6 in dem angestrebten Endzustand.

Eine Walze 22 besitzt an ihrer Mantelfläche im Abstand voneinander angeordnete Einkerbungen 23, welche je ein Verbindungselement 7; 11, 12 aufnehmen. Die Tiefe der Einkerbungen 23 ist geringer als die Materialstärke der Verbindungselemente, so daß dementsprechend die über die Mantelfläche überstehenden Teile der Verbindungselemente im Zusammenwirken mit einer Walze 22' in die Blechbahn eingepreßt werden. Ein weiteres nachgeschaltetes Walzenpaar 24 übernimmt dann das weitere Einpressen der Verbindungselemente 7; 11, 12. Es ist wiederum ein Magazin 14 vorgesehen, welches der Beschickung der Einkerbungen 23 mit den Verbindungselementen dient. Während die Achsen der Walzen 18 senkrecht zur Blechbahn 1 verlaufen, liegen die Achsen der Walzen 22, 22' und 24 parallel zur Ebene der Blechbahn 1. Es ist zweckmäßig, wenn zwischen den Walzenpaaren 22, 22' und 24 eine weitere Walzenstrecke 18 angeordnet ist, so daß die Nut in ihrer Ω-Form bei maximaler Verengung des Nutspaltes und größtmöglichem Anpreßdruck der Nutwand an den Rohrmantel gehalten wird.

Die dargestellte Vorrichtung ermöglicht also die kontinuierliche Herstellung im schnellen kontinuierlichen Durchlauf und arbeitet dementsprechend sehr wirtschaftlich.

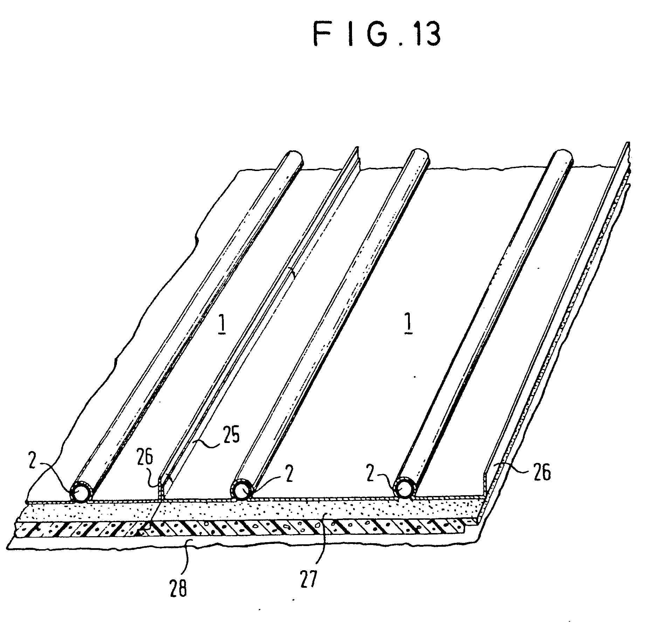

Fig. 13 zeigt ein Solardach, welches nach dem Verfahren der Erfindung hergestellt ist.

Die Ränder 25 und 26 der Blechbahnen 1 sind in üblicher Weise aufgebogen. Zur Herstellung eines Solardaches werden die nach dem beschriebenen Verfahren hergestellten Wärmeaustauschelemente aneinanderanstoßend auf die nicht dargestellte Unterkonstruktion des Daches aufgelegt. Der Rand 26 wird mittels eines bekannten, fortlaufend arbeitenden Werkzeuges um den Rand 25 des benachbarten Wärmeaustauschelementes umgeschlagen. Gleichzeitig wird die Verbindungsstelle umgebördelt. Der Rand 26 kann auch von vornherein hakenförmig gebogen sein. Auf die Unterseite der Blechbahnen 1 ist eine wärmedämmende Isolierschicht 27 aufgeschäumt. Die jeweils den Nutspalt 6 überbrückenden Verbindungselemente 7; 11, 12 haben dabei noch die weitere Funktion, daß sie in die Isolierschicht 27 eingeschäumt werden und so als zusätzliche Halterung für dieselbe dienen. Eine aufgeklebte Kunststoffolie 28 verhindert das Eindringen von Feuchtigkeit in die Isolierschicht 27. Da infolge des Wärmeentzuges das Solardach kälter als die Umgebung ist, kommt der Verhinderung einer Kondenswasserbildung besondere Bedeutung zu. Die Folie 28 kann gleichzeitig als Sichtfolie dienen, d. h. sie bildet die Decke eines unter dem Solardach liegenden Raumes.

Es ist ersichtlich, daß mit dem beschriebenen Verfahren Solardächer hergestellt werden können, die mit üblichen Verlegungstechniken eine durchgehend geschlossene Blechaußenhaut bilden, die einen optimalen Wärmeübergang auf das Wärmeaustauschmedium gewährleisten, die architektonisch ansprechen und die keine größeren Bauhöhen als normale Blechdächer bei gleicher Wärmeisolierung erfordern.

**Patentansprüche**

1. Verfahren zur Herstellung von Wärmeaustauschelementen, insbesondere für Solaranlagen oder elektrische Heizeinrichtungen, bei dem Rohre (2) in halbrundförmige Nuten (3) von Blechbahnen (1) eingebracht werden und bei dem nach Einbringen des Rohres (2) in seine zugeordnete Nut (3) die Randbereiche (4) der Nut (3) durch Preßwerkzeuge (5) gegeneinandergedrückt werden, um den Nutspalt (6) zu verkleinern und die Innenwand der Nut (3) an die Mantelfläche des Rohres (2) anzupressen, wobei dieser Zustand mechanisch fixiert wird, dadurch gekennzeichnet, daß zur mechanischen Fixierung des verkleinerten Nutspaltes (6) zusätzliche Verbindungselemente (7; 11, 12), die sich über den Nutspalt (6) erstrecken und die sich in dem Material der Blechbahn (1) in den Nutrandbereichen (4) durch Einpressen verankern, vorgesehen sind.

2. Verfahren nach Anspruch 1, dadurch gekennzeichnet, daß Ringe (7) als Verbindungselemente verwendet werden, welche den Nutspalt (6) überbrücken.

3. Verfahren nach Anspruch 1, dadurch gekennzeichnet, daß Drahtstücke (11), die je eine unter Vorspannung aufgewickelte Drahtwendel (12) tragen, als Verbindungselemente verwendet werden, wobei die Drahtstücke (11) im Abstand längs der Achse des Rohres (2) und quer zu derselben angeordnet sind.

4. Verfahren nach Ansprüchen 1 bis 3, dadurch gekennzeichnet, daß die die Randbereiche (4) der Nut (3) gegeneinander drückenden Preßwerkzeuge (5) zugleich als Widerlager für ein Preßwerkzeug (8) dienen, durch welches die Verbindungselemente (7; 11, 12) in die Randbereiche (4) der Nut (3) eingepreßt werden.

5. Verfahren nach Ansprüchen 1 bis 4, dadurch gekennzeichnet, daß das Einpressen der Verbindungselemente (7; 11, 12) in diskontinuierlichen Arbeitsschritten erfolgt, wobei die Blechbahn (1) bei offenen Preßwerkzeugen (5, 8) jeweils um die Arbeitsbreite der Preßwerkzeuge (5, 8) in Richtung der Achse des Rohres (2) vorgerückt, anschließend die die Randbereiche (4) der Nut (3) gegeneinander drückenden Preßwerkzeuge (5) und dann das die Verbindungselemente (7; 11, 12) eindrückende Preßwerkzeug (8) in Schließstellung gebracht werden, woraufhin die Preßwerkzeuge (5, 8) geöffnet werden und der Arbeitsschritt wiederholt wird.

6. Verfahren nach Ansprüchen 1 bis 5, dadurch gekennzeichnet, daß jeweils zwei im Abstand parallel zueinander angeordnete Nuten (3) in einer Blechbahn (1) vorgesehen werden und daß die Ränder der Blechbahn zwecks ihrer Verbindung aufgebogen sind.

7. Verfahren nach Ansprüchen 1 bis 6, dadurch gekennzeichnet, daß die Verbindungselemente (7; 11,12) selbsttätig auf die vorrückende Blechbahn (1) aufgelegt werden.

8. Vorrichtung zur Durchführung des Verfahrens nach Ansprüchen 1 bis 7 zur Herstellung von Wärmeaustauschelementen, insbesondere für Solaranlagen oder elektrische Heizeinrichtungen, bei der Rohre (2) in halbrundförmige Nuten (3) von Blechbahnen (1) eingebracht werden und bei der nach Einbringen des Rohres (2) in seine zugeordnete Nut (3) die Randbereiche (4) der Nut (3) durch eine erste Preßeinrichtung mit zangenartig schließenden Preßwerkzeugen (5), welche in die Nutrandbereiche (4) eingreifen und die Nutinnenwand satt an das in die Nut (3) eingelegte Rohr (2) anpressen und die ebene Auflageflächen (5a) besitzen, auf denen die Nutrandbereiche (4) aufliegen, gegeneinandergedrückt werden, wobei dieser Zustand mechanisch fixiert wird, gekennzeichnet durch eine Einrichtung (14, 15, 16) zum selbsttätigen Auflegen von Verbindungselementen (11) auf die Nutrandbereiche (4); eine weitere Preßeinrichtung (8), durch welche die Verbindungselemente (11) in die Nutrandbereiche (4) gegen das durch die ebenen Auflageflächen (5a) der zangenartig schließenden Preßwerkzeuge (5) gebildete Widerlager eingedrückt werden.

9. Vorrichtung nach Anspruch 8, dadurch gekennzeichnet, daß die Einrichtung zum selbsttätigen Auflegen der Verbindungselemente (11) auf die Nutrandbereiche (4) eine Walze (16) mit Einkerbungen (15) enthält, welche aus einem Magazin (14) mit den Verbindungselementen (11,12) beschickt werden.

10. Vorrichtung zur Durchführung des Verfahrens nach Ansprüchen 1 bis 7, dadurch gekennzeichnet, daß Rollen oder Walzen (18) vorgesehen sind, die paarweise im Abstand voneinander mit senkrecht zur Ebene der Blechbahn (1) angeordneten Drehachsen angeordnet sind und deren Mantelflächen (19) konkav ausgehöhlt sind, wobei der Abstand der Stirnränder der Mantelflächen (19) der Breite des gewünschten verengten Nutspaltes (6) entspricht oder bei eventuell vorgeschalteten Paaren etwas größer ist und der Abstand der Mantelflächen (19) etwas unterhalb des Stirnrandes größer als der Durchmesser des Rohres (2) zuzüglich der doppelten Wandstärke der Blechbahn (1) ist, und daß mindestens eine Walze (22, 24) vorgesehen ist, mittels der die Verbindungselemente (7; 11, 12) im kontinuierlichen Durchlauf der Blechbahn (1) in dieselbe eingepreßt werden.

11. Vorrichtung nach Anspruch 10, dadurch gekennzeichnet, daß mehrere Walzenstrecken aus Walzen (18) im Abstand längs der Durchlaufstrecke der Blechbahn (1) angeordnet sind, wobei die erste Walzenstrecke als Führungs- und Einlaufstrecke für die Blechbahn (1) mit ihren Nuten (3) und den eingelegten Rohren (2) dient, während die weiteren Walzenstrecken den Nutspalt (6) stufenweise verengen und die letzten Walzenstrecken die Nut (3) in ihrer Omegaform mit verengtem Nutspalt hält, und daß zwischen den letzten Walzenstrecken Walzenpaare (22, 22'; 24) vorgesehen sind, die die Verbindungselemente zuführen und in die Blechbahn (1) unter Verschließen des Nutspaltes (6) einpressen.

**Claims**

1. Method of manufacture of heat exchange elements, particularly for solar installations or electric heating apparatus, in which pipes (2) are inserted in semi-circular grooves (3) in metal sheets (1), and in which, after the introduction of the pipe (2) into its appropriate groove (3), the edge areas (4) of the groove (3) are pressed one against the other by means of pressing tools (5) in order to make the groove slit (6) smaller and to press the internal wall of the groove (3) on to the surface of the pipe (2), said condition being mechanically fixed, characterized in that for the mechanical fixing of the groove slit (6) reduced in size provision is made for additional connection elements (7; 11, 12) which extend over the groove slit (6) and which become anchored into the material of the metal sheet (1) in the groove edge areas (4) by pressing.

2. Method according to Claim 1, characterized in that rings (7) are used as binding elements which bridge over the groove slit (6).

3. Method according to Claim 1, characterized in that pieces of wire (11), each of which carry a coil of wire (12) wound under tension, are used as connecting elements, the pieces of wire (11) being disposed at intervals along the axis of the pipe (2) and transversally thereto.

4. Method according to Claims 1 to 3, characterized in that the pressing tools (5) which press the edge areas (4) of the groove (3) one against the other serve at the same time as abutments for a pressing tool (8) by means of which the connection elements (7; 11, 12) are pressed into the edge areas (4) of the groove (3).

5. Method according to Claims 1 to 4, characterized in that the pressing in of the connection elements (7; 11, 12) is effected in discontinuous working steps, whereby the metal sheeting (1), when the pressing tools (5, 8) are open, is moved in each instance forward in the direction of the axis of the pipe (2) to the extent of the working width of the pressing tools (5, 8), then the pressing tools (5) pressing the edge areas (4) of the groove (3) one against the other, and subsequently the pressing tool (8) pressing in the connection elements (7; 11, 12) are brought into the closing position, whereupon the pressing tools (5, 8) are opened and the working step is repeated.

6. Method according to Claims 1 to 5, characterized in that in each case two grooves (3) disposed parallel with each other at a distance in a metal sheet (1) are provided and that the edges of the metal sheeting are bent upwards for the purpose of their connection.

7. Method according to Claims 1 to 6, characterized in that the connection elements (7; 11, 12) are laid automatically onto the advancing metal sheet (1).

8. Apparatus for carrying out the method according to Claims 1 to 7 for the manufacture of heat exchange elements, particularly for solar installations or electric heating appliances, in which pipes (2) are inserted in semi-circular grooves (3) in metal sheets (1), and in which, after the introduction of the pipe (2) into the appropriate groove (3), the edge areas (4) of the groove (3) are pressed one against the other by means of a first pressing arrangement with tongs-like closing pressing tools (5) wich engage into the groove edge areas (4) and press the inner wall of the groove fully onto the pipe (2) inserted into the groove (3), and which have level support surfaces (5a) onto which the groove edge areas (4) lie, and are pressed one against the other, this condition being fixed mechanically, characterized in an arrangement (14, 15, 16) for the automatic laying of connection elements (11) onto the groove edge areas (4); a further pressing arrangement (8) by means of which the connection elements (11) are pressed into the groove edge areas (4) against the abutment formed by the level support surfaces (5a) of the tongs-like closing pressing tools (5).

9. Apparatus according to Claim 8, characterized in that the arrangement for the automatic laying of the connection elements (11) onto the groove edge areas (4) contains a roller (16) with notches (15) which are fed from a magazine (14) with the connection elements (11, 12).

10. Apparatus for carrying out the method according to Claims 1 to 7, characterized in that rolls or rollers (18) are provided which are disposed in pairs at a distance from one another with rotation axes arranged perpendicularly to the level of the metal sheet (1), and the surfaces (19) of which are concavely recessed, the distance of the front edges of the surfaces (19) corresponding to the width of the desired narrowed groove slit (6) or, if there should be some pairs added on, slightly greater, and the distance of the surfaces (19) substantially below the front edge being greater than the diameter of the pipe (2), plus double the wall thickness of the metal sheeting (1), and in that at least one roller (22, 24) is provided by means of which the connection elements (7; 11, 12) as the metal sheet (1) moves on continuously are pressed into the latter.

11. Apparatus according to Claim 10, characterized in that several trains of rollers (18) are disposed at intervals along the running path of the metal sheet (1), the first train of rollers acting as a guiding and incoming train for the metal sheet (1) with is grooves (3) with the pipes (2) laid therein, while the further trains of rollers narrow down the groove slit (6) stepwise and the last train of rollers hold the groove (3) in its omega shape with narrowed groove slit, and in that between the last trains of rollers pairs of rollers (22, 22'; 24) are provided which bring on the connection elements and press in the metal sheet (1) as they close the groove slit (6).

**Revendications**

1. Procédé pour la réalisaton d'éléments d'échangeurs de chaleur en particulier pour des installations solaires ou des dispositifs de chauffage électrique, suivant lequel les tubes (2) sont disposés dans des rainures (3) de forme semi-circulaire de bandes de tôle (1), tandis qu'après mise en place du tube (2) dans sa rainure (3) correspondante les zones marginales (4) de la rainure (3) sont repoussées l'une vers l'autre par le moyen d'outils de presse (5) afin de réduire l'espace vide ou entrefer (6) déterminé par la rainure et pour appliquer la paroi intérieure de celle-ci (3) contre la surface périphérique du tube (2), l'état auquel on arrive ainsi étant fixé par voie mécanique, caractérisé en ce que pour assurer cette fixation mécanique de l'entrefer réduit (6) de la rainure on prévoit des éléments additionnels (7; 11, 12) qui s'étendent au-dessus de cet entrefer (6) et qui s'ancrent par enfoncement dans la matière constitutive de la tôle (1) dans les zones marginales (4) de ladite bande de tôle (1).

2. Procédé suivant la revendication 1, caractérisé en ce qu'on utilise comme éléments de liaison des bagues (7) qui chevauchent l'entrefer (6).

3. Procédé suivant la revendication 1, caractérisé en ce qu'on utilise comme éléments de liaison des morceaux (11) de fil métallique dont chacun porte un enroulement également en fil métallique (12) monté sur lui sous précontrainte, ces morceaux (11) étant disposés à un certain écartement les uns des autres le long de l'axe du tube (2) et perpendiculairement à celui-ci.

4. Procédé suivant les revendications 1 à 3, caractérisé en ce que les outils de presse (5) qui appliquent l'une contre l'autre des zones marginales (4) de la rainure (3) servent simultanément d'appui pour un autre outil de presse (8) grâce auquel les éléments de liaison (7; 11, 12) sont enfoncés dans ladite zone marginale (4) de la rainure (3).

5. Procédé suivant les revendications 1 à 4, caractérisé en ce que l'enfoncement sous pression des éléments de liaison (7; 11, 12) s'effectue suivant des phases opératoires discontinues, la bande de tôle (1) étant à chaque fois avancée en direction de l'axe du tube (2), de la largeur de travail des outils de presse (5, 8) alors que ces outils sont en position ouverte, après quoi in amène à la position de fermeture les outils de presse (5) qui repoussent l'une vers l'autre les zones marginales (4) de la rainure (3), et ensuite ceux (8) qui enfoncent les éléments de liaison (7; 11, 12), et enfin on ouvre lesdits outils de presse (5, 8) et l'on répète la phase opératoire.

6. Procédé suivant les revendications 1 à 5, caractérisé en ce qu'on prévoit à chaque fois dans une bande de tôle (1) deux rainures (3) disposées parallèlement l'une à l'autre et en ce qu'on replie les bords de la bande en vue de leur liaison.

7. Procédé suivant les revendications 1 à 6, caractérisé en ce qu'on dispose automatiquement les éléments de liaison (7; 11, 12) sur la bande de tôle (1) en cours d'avance.

8. Dispositif pour la mise en œuvre du procédé suivant les revendications 1 à 7, en vue de la réalisation d'éléments d'échangeurs de chaleur, en particulier pour des installations solaires ou des dispositifs de chauffage électrique, dans lequel des tubes (2) sont disposés dans des rainures (3) de forme semi-circulaire de bandes de tôle (1), tandis qu'après mise en place du tube (2) dans sa rainure (3) correspondante les zones marginales (4) de ladite rainure (3) sont repoussées l'une vers l'autre à l'aide d'un premier dispositif de presse équipé d'outils (5) se refermant à la façon de tenailles, qui s'engagent dans les zones marginales (4) précitées et qui pressent étroitement la paroi intérieure de celles-ci contre le tube (2) introduit dans la rainure (3), lesquels outils comportent des zones de portée plane (5a) sur lesquelles les zones marginales (4) précitées sont disposées, l'état auquel on parvient ainsi étant fixé par voie mécanique, caractérisé par:

— un dispositif (14, 15, 16) pour poser automatiquement des éléments de liaison (11) sur les zones marginales (4) des rainures;

— un autre dispositif de presse (8) grâce auquel les éléments de liaison (11) sont enfoncés dans les zones marginales (4) des rainures contre la portée réalisée par les surfaces planes (5a) de l'outil de presse (5) se ferment à la façon de tenailles.

9. Dispositif suivant la revendication 8, caractérisé en ce que le dispositif pour la pose automatique des éléments de liaison (11) sur les zones marginales (4) des rainures comprend un tambour (16) avec entailles (15), lequel est alimenté en éléments de liaison (11, 12) à partir d'un magasin (14).

10. Dispositif suivant les revendications 1 à 7, caractérisé en ce qu'il y est prévu des rouleaux ou tambours (18), lesquels sont disposés par paires à un certain écartement l'un de l'autre avec leurs axes de rotation perpendiculaires au plan de la bande de tôle (1), et dont les parois périphériques (19) sont creusées à un profil concave, l'évartement des bords avant de ces parois périphériques (19) correspondant à la largeur désirée pour l'entrefer contracté (6) de la rainure ou étant éventuellement plus fort dans le cas de paires de tambour disposées en amont, tandis que l'écartement de ces parois périphériques (19) quelque peu au-dessous du bord avant est plus grand que le diamètre du tube (2) plus la double épaisseur de la tôle (1), et en ce qu'il est prévu au moins un tambour (22, 24) par le moyen duquel les éléments de liaison (7; 11, 12) sont enfoncés dans la tôle (1) qui avance de façon continue.

11. Dispositif suivant la revendication 10, caractérisé en ce qu'il y est disposé plusieurs trains faits de tambours (18) situés à un certain écartement sur la longeur de la bande de tôle (1), le premier servant de guide et d'entrée pour cette tôle (1) avec ses rainures (3) et les tubes (2) introduits dans celles-ci, tandis que les trains suivants étranglent par phases successives l'entrefer (6) de la rainure et que le dernier train retient la rainure (3) à sa forme en oméga avec réduction de l'entrefer précité, et en ce qu'entre les derniers trains il est prévu des paires de rouleaux (22, 22', 24) qui amènent les éléments de liaison et qui les enfoncent dans la bande de tôle (1) moyennant fermeture de l'entrefer (6) de la rainure.

FIG.1

FIG.2

FIG.3

FIG.4

FIG.6

FIG.5

FIG.7

FIG.8

FIG.9

FIG.10

FIG.11

FIG.12

# F I G . 13